# DEMANDE DE BREVET EUROPEEN

(11) **EP 2 479 959 A1**
(43) Date de publication de la demande: **25.07.2012**
(21) Numéro de dépôt: 11305028.0
(22) Date de dépôt: 12.01.2011
(51) Int. Cl.: H04L 29/08, H04W 8/26

(54) **Procédé d'établissement d'un canal de communication IP bidirectionnel dans un réseau de télécommunications**

(71) Demandeur: Gemalto SA, 92190 Meudon (FR)
(72) Inventeur: Barras, Cyril, 83470, SAINT MAXIMIN LA STE BAUME (FR); Fine, Jean-Yves, 13010, MARSEILLE (FR); Phan, Ly-Thanh, 92350, Le Plessis Robinson (FR); Morel, Didier, 13009, MARSEILLE (FR)

(57) **Abrégé**

L'invention concerne un procédé d'établissement d'un canal de communication IP (24) bidirectionnel dans un réseau de télécommunications (LTE) entre un serveur local atteignable via une connexion IP d'un terminal (ME) et un serveur distant (OTA).

Selon l'invention, il consiste à :
i- transmettre (10) du serveur local au terminal (ME), l'adresse IP (IPa) du serveur distant (OTA) ainsi qu'un numéro de port de communication du serveur local ;
ii- après établissement d'une connexion IP entre le réseau (LTE) et le terminal (ME), transmettre (13) du terminal (ME) au serveur local l'adresse IP (IPb) du terminal (ME) ;
iii- transmettre (14) du serveur local au terminal (ME), une requête de connexion au serveur distant (OTA), cette requête comprenant :
- l'adresse IP (IPa) du serveur distant (OTA),
- l'adresse IP (IPb) du terminal (ME),
- un identifiant (ICCID) du serveur local,
- le numéro de port de communication du serveur local ;

iv- transmettre, après établissement (15) du canal de communication IP entre le terminal (ME) et le serveur distant (OTA), du serveur local au serveur distant (OTA) :
- l'adresse IP (IPb) du terminal (ME),
- un identifiant (ICCID) du serveur local,
- le numéro de port de communication du serveur local,

v- associer au niveau du serveur distant (OTA) l'identifiant (ICCID) du serveur local et l'adresse IP (IPb) du terminal pour que le serveur distant (OTA) connaisse à quelle adresse IP dans le réseau (LTE) il peut joindre le serveur local.

## Description

Le domaine de l'invention est celui des télécommunications dans des réseaux cellulaires et concerne plus précisément un procédé permettant d'établir d'un canal de communication IP bidirectionnel entre un serveur local atteignable via une connexion IP d'un terminal et un serveur distant.

Le serveur local est par exemple un Smart Card Web Server (en anglais) intégré dans une carte à puce (SIM) permettant à un utilisateur d'un terminal mobile d'accéder à des services Internet. La carte à puce est par exemple un UICC (Universal Integrated Circuit Card) insérable dans un terminal ou intégrée de manière fixe ou bénéficiant d'un canal de communication local avec ce dernier.

Dans les réseaux de télécommunications jusqu'à la troisième génération, il est possible à un serveur distant, par exemple une plateforme OTA (Over The Air en anglais), d'accéder à un UICC, par exemple pour y mettre à jour des données. Cet accès est classiquement réalisé par l'émission de SMS spéciaux.

Dans les réseaux de quatrième génération, tel le réseau LTE (Long Term Evolution en anglais) par exemple, les communications s'effectuent sous la forme de paquets IP et le canal SMS n'existe plus.

La présente invention propose un mécanisme permettant d'accéder par un serveur distant et de manière sécurisée à un UICC atteignable via une connexion IP d'un terminal, en ne connaissant que l'adresse IP de ce terminal. Pour fixer les idées, l'UICC est par exemple une carte comprise dans le terminal (un téléphone mobile, un ordinateur ou encore une machine) et le serveur distant est un serveur OTA exploitant le réseau d'un opérateur pour télécharger des données dans l'UICC ou lire des données qui y sont stockées.

Le procédé selon l'invention consiste à :
i- transmettre du serveur local au terminal, l'adresse IP du serveur distant ainsi qu'un numéro de port de communication du serveur local ;
ii- après établissement d'une connexion IP entre le réseau et le terminal, transmettre du terminal au serveur local l'adresse IP du terminal ;
iii- transmettre du serveur local au terminal, une requête de connexion au serveur distant, ladite requête comprenant :
   - l'adresse IP du serveur distant,
   - l'adresse IP du terminal,
   - un identifiant du serveur local,
   - le numéro de port de communication du serveur local ;
iv- transmettre, après établissement du canal de communication IP entre le terminal et le serveur distant, du serveur local au serveur distant :
   - l'adresse IP du terminal,
   - un identifiant du serveur local,
   - le numéro de port de communication du serveur local,
v- associer au niveau du serveur distant l'identifiant du serveur local et l'adresse IP du terminal pour que le serveur distant connaisse à quelle adresse IP dans le réseau il peut joindre le serveur local.

Ainsi, le serveur local (par exemple situé dans un UICC) qui connaît l'adresse IP du serveur distant déclenche l'établissement du canal de communication en fournissant au serveur distant tous les éléments lui permettant de s'adresser à lui (adresse du terminal avec lequel coopère le serveur local et numéro de port). Un canal de communication IP bidirectionnel est ainsi établi entre le serveur local et le serveur distant.

L'étape -ii- consiste préférentiellement à connecter le terminal au réseau et à transmettre l'adresse IP du terminal au serveur local.

Le serveur local est avantageusement embarqué dans un UICC. Préférentiellement, l'UICC est compris dans le terminal.

L'invention s'applique avantageusement dans un réseau à commutation de paquets tel qu'un réseau LTE.

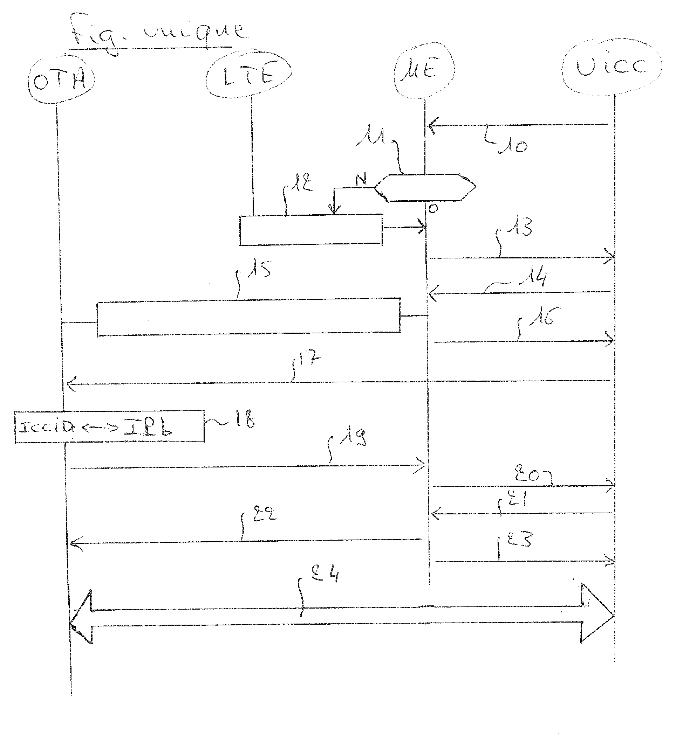

D'autres caractéristiques et avantages de l'invention apparaîtront à la lecture de la description suivante d'un mode de mise en oeuvre avantageux, donné à titre illustratif et non limitatif, et de la figure unique annexée montrant le mécanisme d'établissement d'un canal de communication IP bidirectionnel entre un serveur local et un serveur distant.

Quatre entités entrent en fonction pour l'établissement de ce canal de communication : un UICC comportant un serveur local (SCWS) ou tout autre élément comprenant un serveur local atteignable via une connexion IP à partir d'un terminal, le terminal ME lui-même (pouvant par exemple comprendre cet UICC), le réseau de télécommunications (par exemple un réseau LTE) et un serveur distant, par exemple constitué par une plateforme OTA.

Le serveur local ou l'UICC connaît l'adresse IP, nommée IPa, du serveur distant OTA autorisé à accéder à l'UICC. Lors de la phase de démarrage de l'UICC (phase de boot en anglais), ce dernier transmet au terminal ME, lors d'une étape 10, l'adresse IPa et le numéro de port de communication de son serveur local. Cette transmission peut par exemple être de la forme :
BIP Open Channel (UICC Mode Serveur Distant [IPa, n° de port])

Lors d'une étape 11, il est vérifié si le terminal ME n'est pas déjà connecté au réseau LTE. S'il ne l'est pas (N), le terminal ME s'attache au réseau LTE (étape 12) et une adresse IPb lui est transmise. S'il est déjà connecté au réseau LTE, le terminal dispose déjà de cette adresse IPb et la transmet, lors d'une étape 13 à l'UICC. Cette transmission peut s'effectuer sous la forme d'un Terminal Response (IPb).

A ce moment là, le port serveur de l'UICC est accessible de l'extérieur par le serveur distant, le terminal ME étant capable de filtrer les demandes d'accès externes pour ne permettre l'accès au serveur local qu'au serveur distant identifié par l'adresse IPa.

Le serveur local de l'UICC transmet alors au terminal ME, lors d'une étape 14, une requête de connexion au serveur distant OTA.

Cette requête peut se présenter sous la forme :
Open Channel (BIP Client [IPa, IPb, ICCID, n° de port)
   c'est-à-dire qu'elle contient l'adresse IPa du serveur distant, l'adresse IPb dudit terminal, un identifiant du serveur local (ici l'ICCID de la carte UICC qui est son numéro de série), et le numéro de port de communication du serveur local.

A l'étape 15, un canal de communication IP est donc établi entre le terminal ME et le serveur distant OTA et le terminal ME peut en informer l'UICC par une réponse « Terminal Response » lors d'une étape 16.

Lors d'une étape 17, le serveur local transmet au serveur distant l'adresse IP du terminal ME, l'identifiant du serveur local et le numéro de port de communication du serveur local.

Cette requête peut se présenter sous la forme :
Send Data (IPb, n° de port, ICCID)

Lors d'une étape 18, le serveur distant OTA associe dynamiquement l'identifiant ICCID du serveur local et l'adresse IPb du terminal ME pour que le serveur distant OTA connaisse à quelle adresse IP dans le réseau il peut joindre le serveur local.

Lors d'étapes facultatives 19 à 23, le serveur distant OTA peut informer le terminal ME que l'opération s'est déroulée correctement (étape 19), le terminal en informe le serveur local (étape 20), le serveur local demande au terminal ME de fermer sa connexion avec le serveur distant OTA (étape 21) et, après fermeture de ce canal (étape 22), le terminal ME en informe le serveur local (étape 23).

Lors d'une étape 24, le serveur local et le serveur distant sont connectés l'un à l'autre et peuvent échanger des données ou des programmes via le terminal ME. Il est notamment possible d'effectuer un téléchargement de données ou de programmes dans l'UICC à partir du serveur OTA distant. A la fin des échanges, le canal est fermé.

Comme précédemment indiqué, le serveur local est de préférence embarqué dans un UICC. Il s'agit alors d'un Smart Card Web Server.

L'UICC peut être classiquement compris dans le terminal, soit de manière fixe, soit de manière amovible, ou alors dialoguer avec le terminal par une liaison courte portée, par exemple de type eGo, tel que décrit sur le site Internet http://www.ego-project.eu, ou alors par une liaison Bluetooth ou Wifi.

## Revendications

1. Procédé d'établissement d'un canal de communication IP (24) bidirectionnel dans un réseau de télécommunications (LTE) entre un serveur local atteignable via une connexion IP d'un terminal (ME) et un serveur distant (OTA), **caractérisé en ce qu'**il consiste à :
i- transmettre (10) dudit serveur local audit terminal (ME), l'adresse IP (IPa) dudit serveur distant (OTA) ainsi qu'un numéro de port de communication dudit serveur local ;
ii- après établissement d'une connexion IP entre ledit réseau (LTE) et ledit terminal (ME), transmettre (13) dudit terminal (ME) audit serveur local l'adresse IP (IPb) dudit terminal (ME) ;
iii- transmettre (14) dudit serveur local audit terminal (ME), une requête de connexion audit serveur distant (OTA), ladite requête comprenant :
- l'adresse IP (IPa) dudit serveur distant (OTA),
- l'adresse IP (IPb) dudit terminal (ME),
- un identifiant (ICCID) dudit serveur local,
- ledit numéro de port de communication dudit serveur local ;
iv- transmettre, après établissement (15) dudit canal de communication IP entre ledit terminal (ME) et ledit serveur distant (OTA), dudit serveur local audit serveur distant (OTA) :
- l'adresse IP (IPb) dudit terminal (ME),
- un identifiant (ICCID) dudit serveur local,
- ledit numéro de port de communication dudit serveur local,
v- associer au niveau dudit serveur distant (OTA) ledit identifiant (ICCID) dudit serveur local et l'adresse IP (IPb) dudit terminal pour que ledit serveur distant (OTA) connaisse à quelle adresse IP dans le réseau (LTE) il peut joindre ledit serveur local.

2. Procédé selon la revendication 1, **caractérisé en ce que** l'étape ii consiste à connecter ledit terminal (ME) audit réseau (LTE) et à transmettre l'adresse IP (IPb) dudit terminal audit serveur local.

3. Procédé selon l'une des revendications 1 et 2, **caractérisé en ce que** ledit serveur local est embarqué dans un UICC.

4. Procédé selon la revendication 3, **caractérisé en ce que** ledit UICC est compris dans ledit terminal (ME).

5. Procédé selon l'une des revendications 1 à 4, **caractérisé en ce que** ledit réseau de télécommunications est un réseau LTE.
